# EUROPEAN PATENT APPLICATION

(11) **EP 4 760 375 A1**
(43) Date of publication of application: **17.06.2026**
(21) Application number: 24219788.7
(22) Date of filing: 13.12.2024
(51) Int. Cl.: G02F 1/01, G02B 6/12, G02F 1/025

(54) **PHOTONIC INTEGRATED CIRCUIT AND METHOD FOR ANNEALING**

(71) Applicant: LiGenTec SA, 1024 Ecublens (CH)
(72) Inventor: Mancinelli, Mattia, 1024 Ecublens (CH); Wuytens, Pieter, 1024 Ecublens (CH); Sacchetto, Davide, 1462 Yvonand (CH)
(74) Representative: Isarpatent

(57) **Abstract**

The present invention provides a photonic integrated circuit comprising a waveguide structure (10) including a core layer (12) and a cladding layer (14) surrounding the core layer (12), the core layer (12) having a higher index of refraction than the cladding layer (14), a local opening (20) formed through a surface (10a) of the waveguide structure (10) into the cladding layer (14) adjacent to a functional part (11) of the waveguide structure (10), and at least one heating element (30, 30a-c) disposed between the core layer (12) and the surface adjacent to the local opening (20) in the cladding layer (14), the at least one heating element (30, 30a-c) arranged and configured to provide heat to the core layer (12) when activated. Further the present invention provides a corresponding method for annealing using the photonic integrated circuit (1) as well.

## Description

### TECHNICAL FIELD OF THE INVENTION

The invention relates to a Photonic Integrated Circuit, PIC, as well as to a method for annealing a doped core layer of the PIC. Specifically, the present disclosure pertains to a PIC with a waveguide structure incorporating a functional part, and a method for forming and annealing the functional part using localized heating elements.

### TECHNICAL BACKGROUND

Amplifiers and other optically active devices can be integrated into photonic integrated circuits. It is important to provide devices having low optical losses at relevant pump and signal wavelengths, such as the O-band at about 1310 nm and the C-band at about 1540 nm and corresponding pump wavelengths. Losses in layers doped with rare earth elements as the active layers are critical since these may carry a high optical power density. Therefore, high-quality components and materials are required for these layers. Furthermore, the photonic integrated circuit may have to be compatible with a back-end of line structure for which only limited temperatures can be applied during the manufacturing process.

Therefore, it is an objective of the invention to provide an improved process and structure for annealing a portion of a waveguide structure of a PIC.

US 2008/0267237 A1 describes a method of doping an oxide via ion implantation including a step of annealing the doped oxide.

### SUMMARY OF THE INVENTION

According to the invention, this problem is solved in each case by the subject matters of the independent claims.

According to a first aspect of the invention, a Photonic integrated circuit, PIC, is provided. The photonic device comprises a waveguide structure including a core layer and a cladding layer surrounding the core layer, the core layer having a higher index of refraction than the cladding layer, a local opening formed through a surface of the waveguide structure into the cladding layer adjacent to a functional part of the waveguide structure, and at least one heating element disposed between the core layer and the surface adjacent to the local opening in the cladding layer, the at least one heating element arranged and configured to provide heat to the core layer when activated.

According to a second aspect of the invention, a method for annealing, in particular for annealing the inventive photonic integrated circuit is provided. The method for annealing comprises providing a photonic integrated circuit, PIC, having a waveguide structure including a core layer and a cladding layer surrounding the core layer, the core layer having a higher index of refraction than the cladding layer, providing at least one heating element between the core layer and the surface adjacent to the local opening in the cladding layer, etching locally the cladding layer at least partly through a surface of the waveguide structure to form a local opening, implanting a rare earth element into a section of the core layer through the local opening to form a doped core section of the core layer, and annealing the doped core section for dopant activation by applying electrical power to the at least one heating element such that a temperature above a predetermined temperature is generated by the at least one heating element for a predetermined time period.

A particular advantage in the solution according to an aspect of the invention is that since the heating element is placed in the close proximity of a waveguide structure that is needed to be annealed. The use of materials for the heater element that reliably operate at temperatures higher than the predetermined temperature, which can be 900 degree Celsius or higher. This allows to locally anneal sections of the core layer and the adjacent portions of the cladding layer without compromising the rest of the photonic device the PIC may be integrated in. The solution provides flexibility in modifying PICs and is particular appealing to activate dopants such as Erbium and other rare earth elements into silicon dioxide or silicon nitride to produce erbium-doped waveguide amplifiers.

The surface of the waveguide structure may be a top surface or a side surface of the waveguide structure. The function part of the waveguide structure represents, in most of the following embodiments, a part of the waveguide structure, which may be used as an optical amplifier due to a rare-earth doped core section. However, the present invention is not limited to such function part. The functional part may be a modulator, a resonator, an edge coupler or any other photonic component of the PIC 1

The proposed method may be applied to anneal locally the oxides composing the SiN stack if this is not allowed before a BEOL (back-end of line). An example is an edge coupler, where an annealed oxide in the core or cladding layer makes a big difference only at the close to the tip (chip edge). A local annealing can improve the optical performance (i.e insertion loss).

According to some further embodiments according to the invention, a substrate, wherein the waveguide structure is formed on the substrate, wherein the substrate comprises a cavity beneath the doped core section. The cavity reduces the dissipation of the heat generated by the at least heating element for annealing the doped core section. By the presence of the cavity, the amount of electric power can be reduced to achieve a predetermined temperature for annealing.

According to some further embodiments according to the invention, the at least one heating element is buried in the cladding layer, wherein the at least one heating element is configured as a metal conductor providing Joule heating when activated. In this way, the heating element can be brought in close proximity to the doped core section for annealing.

According to some further embodiments according to the invention, a first heating element arranged on a first side of the local opening, and a second heating element arranged on a second side of the local opening, the second side being opposite to the first side of the local opening. In this way, heating for annealing can be performed more homegeneously from two sides.

According to some further embodiments according to the invention, further comprising a first antenna element being resonant to a first AC frequency, and a second antenna element being resonant at a second AC frequency different from the first AC frequency, wherein the first antenna element is arranged adjacent to a first portion of the at least one heating element, and the second antenna element is arranged adjacent to a second portion of the at least one heating element. When the first and/or second antenna element recveives electric power throught induction at the respective first and/or second AC frequency, the electric power is transferred to the respective first and/or second portion of the heating element. In this way, selective heating can be achieved through inductive energy transfer by two different AC frequencies to the respective first and second antenna elements.

According to some further embodiments according to the invention, the first heating element includes a first electric contact and the second heating element includes a second electric contact, wherein a ground voltage is applied to the first electric contact, and a signal voltage is applied to the second electric contact to generate a first current to the heating elements for activating the first and second heating elements. In this way, selective heating can be achieved through the activation of the heating elements by the respective first and second electric contacts.

According to some further embodiments according to the invention, the signal voltage is one of a DC-voltage to generate a DC-current as the first current, an AC-voltage to generate an AC-current as the first current, a pulsed signal. This reduces the heat load of a heating element, thus increases the lifetime of the heating elements.

According to some further embodiments according to the invention, the local opening is filled with a first material, wherein the first material is a thermal conductor, and preferrably an electric insulator. In this way, by the activation of the heating elements, the heat spreads through the filling material so that the doped core section is annealed more homogeneously.

According to some further embodiments according to the invention, the waveguide structure is provided on a substrate of the PIC, further comprising: etching the substrate beneath the doped core section to form a first cavity. The cavity reduces the dissipation of the heat generated by the at least heating element for annealing the doped core section. By the presence of the cavity, the amount of electric power can be reduced to achieve a predetermined temperature for annealing.

According to some further embodiments according to the invention, a first heating element is provided on a first side of the local opening, and a second heating element is provided on a second side of the local opening, the second side being opposite of the first side of the local opening.

According to some further embodiments according to the invention, the first heating element includes a first electric contact and the second heating element includes a second electric contact, wherein a ground voltage is applied to the first electric contact and a signal voltage is applied to the second electric contact to generate a first current to the first and second heating elements.

According to some further embodiments according to the invention, the predetermined temperature is more than 900°C or more than 1000°C. This temperature is thus applicable without damaging for components of the PIC.

According to some further embodiments according to the invention, the method further comprises: filling the local opening with a first material before applying electrical power to the at least one heating element, wherein the first material is a thermal conductor, and preferrably an electric insulator. In this way, by the activation of the heating elements, the heat spreads through the filling material so that the doped core section is annealed more homogeneously.

According to a third aspect of the invention, a Photonic integrated circuit, PIC, is provided. The PIC comprises a waveguide structure including a core layer and a cladding layer surrounding the core layer, the core layer having a higher index of refraction than the cladding layer, a local opening formed through a surface of the waveguide structure into the cladding layer above a doped core section of the core layer, a first metal conductor arranged on a first side of the local opening, and a second metal conductor arranged on a second side of the local opening, the second side being opposite to the first side of the local opening, wherein the doped core section includes a rare earth element.

According to the third aspect, two heating element configured as a metal conductors are provided that are brought into close proximity to the doped core section for annealing. The two metal conductors ensure by activation an annealing with a homogeneous heat distribution from two sides of the local opening.

According to some further embodiments according to the invention, the first metal conductor includes a first electric contact and the second metal conductor includes a second electric contact, wherein the first and second metal conductors are arranged and configured to provide heat to the doped core section when a current is applied to the first and second metal conductors. By the metal contacts, electric power can be applied directly to the metal conductors for activation.

The above embodiments and further developments can be combined with each other as desired, if appropriate. In particular, all features of the PICs are transferable to the method for annealing, and vice versa. Other possible aspects, further developments and implementations of the invention also include combinations of features of the invention described above or below with regard to the embodiment examples that are not explicitly mentioned. In particular, the skilled person will also add individual aspects as improvements or additions to the respective basic form of the present invention.

Advantageous embodiments and further developments emerge from the description with reference to the figures.

### BRIEF SUMMARY OF THE DRAWINGS

The present invention is explained more specifically below on the basis of the exemplary embodiments indicated in the schematic figures, in which:
- Fig. 1: shows a schematic illustration of a cross-sectional view in a X/Y-plane of a photonic integrated circuit according to an embodiment of the invention;
- Fig. 2: shows a schematic illustration of a cross-sectional view in a X/Y-plane of a photonic integrated circuit according to a further embodiment of the invention;
- Fig. 3: shows a schematic illustration of a top view in a X/Z-plane of a photonic integrated circuit according to the embodiment of Fig. 1;
- Fig. 4: shows a schematic illustration of a cross-sectional view in a X/Y-plane of a photonic integrated circuit according to a further embodiment of the invention;
- Fig. 5: shows a schematic illustration of a top view in a X/Z-plane of a photonic integrated circuit according to a further embodiment of the invention;
- Fig. 6: shows a schematic illustration of a cross-sectional view in a X/Y-plane of a photonic integrated circuit according to a further embodiment of the invention;
- Fig. 7: shows a schematic illustration of a top view in a X/Z-plane of a photonic integrated circuit according to a further embodiment of the invention;
- Fig. 8: shows a schematic illustration of a top view in a X/Z-plane of a photonic integrated circuit according to a further embodiment of the invention;
- Fig. 9: shows a schematic illustration of a cross-sectional view in a X/Y-plane of a photonic integrated circuit according to a further embodiment of the invention;
- Fig. 10: shows a flowchart of a method for annealing according to an embodiment of the invention.
- Fig. 11a-b: shows a schematic illustration of a cross-sectional view in a X/Y-plane of a photonic integrated circuit according to a further embodiment of the invention; and
- Fig. 12: shows a schematic illustration of a top view in a X/Z-plane of a photonic integrated circuit according to the embodiment of Fig. 11a-b;

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

### DESCRIPTION OF EMBODIMENTS

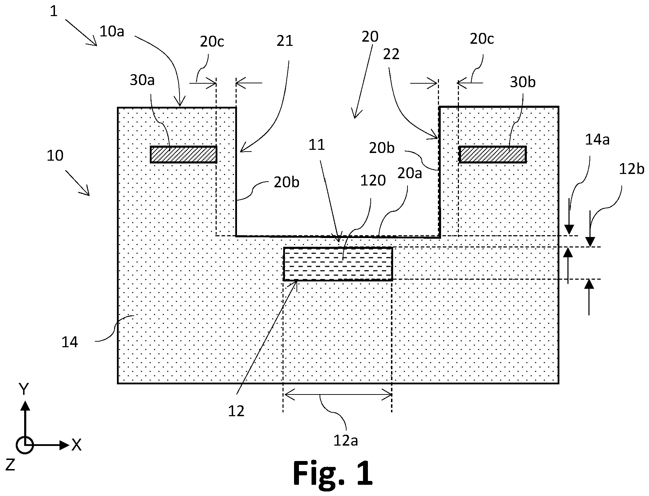

Fig. 1 shows a schematic illustration of a cross-sectional view in a X/Y-plane of a photonic integrated circuit, PIC, 1 according to an embodiment of the invention.

The PIC 1 comprises a waveguide structure 10, which includes a core layer 12 and a cladding layer 14 surrounding the core layer 12. The core layer 12 has a higher index of refraction than the cladding layer 14. In preferred embodiments, the core layer 12 is composed of SiN and the cladding layer is composed of SiO2 for a high index contrast at suitable wavelengths such as in the O-band at about 1310 nm and the C-band at about 1540 nm and corresponding pump wavelengths for amplification. Any other suitable materials, in particular oxides, with corresponding refractive indices may be used for the cladding layer 14 and the core layer 12 of the waveguide structure 10.

The waveguide structure 10 comprises a local opening 20 formed through a surface 10a of the waveguide structure 10 into the cladding layer 14 adjacent to a functional part 11 of the waveguide structure 10. The local opening 20 is defined by sidewalls 20b, which extend from the surface 10a down to the functional part 11 of the waveguide structure 10 and a bottom surface 20a, which is adjacent to the functional part 11. In preferred embodiments, the local opening 20 is etched into the cladding layer 14 through the surface 10a. The surface 10a of the waveguide structure 10 may be a top surface or a side surface of the waveguide structure 10.

Adjacent to the local opening 20, at least one heating element 30 is disposed between the core layer 12 and the surface 10a within the cladding layer 14. The heating elements 30 are arranged and configured to provide heat to the functional part 11 and the cladding layer 14 when activated. The heating elements 30 are shown to be buried within the cladding layer 14, positioned on either side 21, 22 of the local opening 20. A gap 20c between the sidewalls 20b and the heating elements 30a and 30b may be between 0 nm to about 5000 nm. The gap 20c can be the same or different on the first and second sides 21, 22. Specifically, a first heating element 30a is arranged on a first side 21 of the local opening 20, and a second heating element 30b is arranged on a second side 22 of the local opening 20, opposite the first side 21. This arrangement ensures uniform heating of the functional part 11 during the annealing process.

In the present embodiment, the functional part 11 of the waveguide structure 10 comprises a doped core section 120 of the core layer 12, which includes a rare earth element. Any rare earth element may be applied according to the specific application. In preferred embodiments, Erbium is chosen as rare earth element in order to fabricate an optical amplifier e.g. for the C-band at about 1540 nm wavelength. The doped core section 120 is positioned directly beneath the local opening 20, allowing for efficient heating and dopant activation by the activation of the heating elements 30a, 30b. "Beneath" is defined to be the vertical direction in the PIC as shown in the cross-sectional view of Fig. 1.

The cladding layer 14 is shown to have a thickness 14a between the doped core section 120 of the core layer 12, whereas the core layer 12 has a thickness 12b and a width 12a. The doped core section 120 indicates a specific area targeted for heating and dopant activation. The width 12a of the core layer 12 may be several micrometer and its thickness 12b between 100 nm to about 800 nm and more as well. The thickness 14a between the doped core section 120 and the bottom surface 20a of the local opening 20 may range from 0 nm to 100 nm and more.

The local opening 20 extends through the cladding layer 14, providing access to the doped core section 120 of the core layer 12. This configuration facilitates processes such as annealing, where heat is applied to activate the dopants within the core layer 12. Since the local opening can be fabricated virtually at any desired place on the PIC 1, it provides flexibility for manipulating and modifying a waveguide structure 10 of a PIC. Furthermore, by disposing the heating elements 30 close to the functional part 11 such as the doped section 120 of the core layer 12, such functional part 11 can be annealed without annealing the whole PIC 1 or the entire photonic device, the PIC 1 may be integrated in.

In summary, Figure 1 provides a detailed cross-sectional view of the PIC 1, highlighting the arrangement of the waveguide structure 10, the local opening 20, the heating elements 30, and the doped core section 120 of the core layer 12. The precise positioning of these components ensures effective heating and activation of the doped core section 120, which is critical for the functionality of the PIC 1.

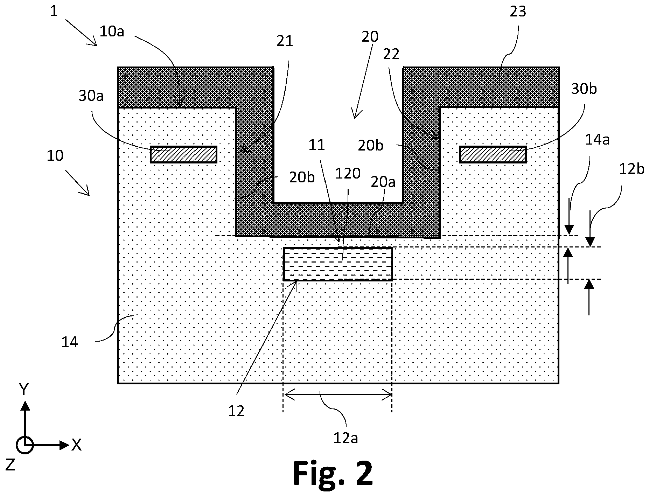

Fig. 2 shows a schematic illustration of a cross-sectional view in a X/Y-plane of a photonic integrated circuit 1 according to a further embodiment of the invention.

This embodiment is based on the embodiment described and shown in Fig. 1. In this embodiment, this local opening 20 is partly filled with a filling material 23 in form of a thin film 23, which expands also over the surface 10a of the waveguide structure. The filling material 23 is a thermal conductor and preferably an electric insulator. The thin film 23 improves the heat flow from the heating elements 30 to the doped core section 12. It further blocks the dissipation of the heat by air convection within the local opening 20, in case the local opening 20 is not filled with any filling material 23. Suitable thermally conductive materials 23 might be diamond-like carbon, doped amorphous carbon, amorphous silicon, doped polycrystalline silicon. Preferably a tetrahedral amorphous carbon (ta-C) with high level of sp3-hybridation and, consequently a high thermal conductivity > 100 W/mK.

To further increase thermal conductivity, the amorphous carbon layer might be co-deposited with other elements, such as silicon, Si or metals. This allows to produce thin films 23 that are electrically insulators with high thermal conductivity that are also stable at the annealing temperature of interest. Thermally conductive thin film 23 might be deposited by CVD techniques, for instance plasma-enhanced CVD deposition from carbon precursor gases. Conveniently, diamond-like thin films can be selectively etched via an oxygen plasma in barrel reactors with very high selectivity towards silicon, Si, silicon dioxide SiO2 and metal heaters. This allows to perform the deposition of the diamond-like thin-film 23, bias heaters to produce the amount of heat required for annealing region 120 and, selectively remove layer 23.

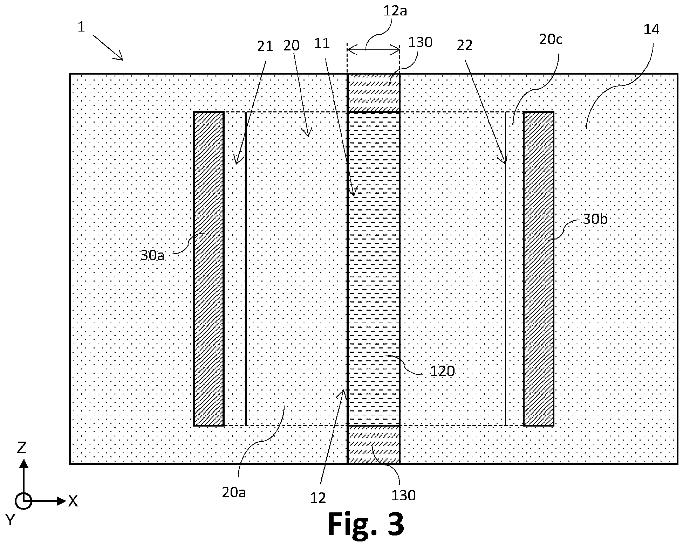

Fig. 3 shows a schematic illustration of a top view in a X/Z-plane of a PIC 1 according to the embodiment of Fig. 1.

It can be seen that the core layer 12 is divided into a doped core section 120 as the functional part 11 of the waveguide structure 10 and an undoped core section 130, which is not located below the local opening in this embodiment. In this embodiment, the doped core section 120 includes a rare earth element. Both, the doped core section 120 and the undoped core section 130 have a width 12a, and a thickness 12b (not shown in Fig. 3) in this embodiment.

Fig. 3 shows, that at least one heating element 30a, 30b is disposed adjacent to the local opening 20 between the core layer 12 and the surface 10a of the cladding layer 14, i.e. of the waveguide structure 10. In this embodiment, two heating elements 30a, 30b are disposed one on each side 21, 22 of the local opening 20. These heating elements 30 are configured to provide heat to the functional part 11 when activated. The heating elements 30a, 30b are buried in the cladding layer 14.

The heating elements 30 are arranged on opposite sides of the local opening 20, with one heating element 30a on the first side 21 and another heating element 30b on the second side 22, opposite to the first side 21.

The local opening 20 having a bottom surface 20a is depicted in Fig. 3, indicating the region where the rare earth elements are implanted into the doped core section 120 This local opening 20 ensures that the entire doped core section 120 receives the necessary treatment for optimal photonic performance.

In summary, Figure 3 provides a detailed view of the waveguide structure 10, highlighting the core layer 12, cladding layer 14, local opening 20, and heating elements 30. The arrangement and configuration of these components are crucial for the functionality and performance of the photonic integrated circuit 1.

The PIC may comprise antenna elements 33a, 33b for activating the heating elements 30a, 30b through inductive energy transfer or by electric contacts, which are not shown in Fig. 3 but described further below. In embodiments using inductive energy transfer, the heating elements 30a, 30b are arranged adjacent to the antenna elements 33a, 33b resonant at a AC frequency through which the energy is transferred wirelessly.

By the activation of the heating elements 30a, 30b, annealing may be performed such that a temperature above a predetermined temperature is generated by the at least one heating element for a predetermined time period. The predetermined temperature is at least 900°C, preferably 1000°C, so that a temperature between e.g. 1000°C and 1500°C is applied through the heating elements 30a, 30b. This heat may be applied for several minutes to about an hour for anneling the functional part 11 of the waveguide structure 10. In the present embodiment, the heating elements 30a, 30b are configured as metal conductors 30a, 30b, which provide Joule heating when activated. The activation of the heating elements 30a, 30b with such predetermined temperature and time may lead to sacrificing the heating elements 30a, 30b, the main purpose to activate the rare earth elements of the doped core section 120 may be achieved without compromising the PIC 1 and its components.

In the present embodiment, the functional part 11 of the waveguide structure 10 is a doped core section 120 of the core layer 12. In further embodiments, the functional part may be a doped core section 120 of the core layer 12 and the cladding layer 14. In further embodiments, the functional part 11 may be a modulator, a resonator or any other photonic component of the PIC 1. The local opening 20 can thus be used to modify or improve optical and electrical properties of the waveguide structure 10 by e.g. doping, functionalization or transfer printing.

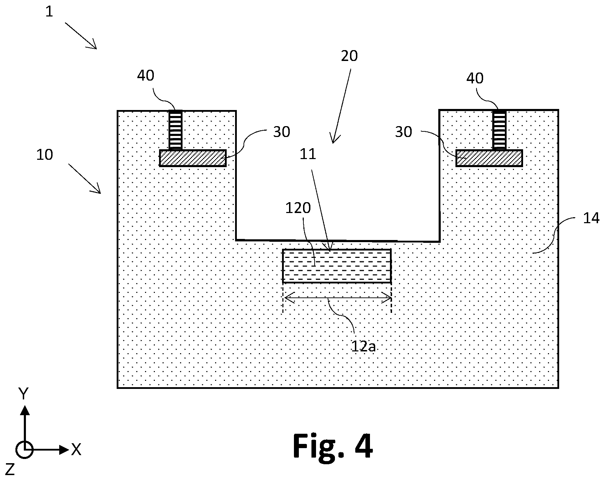

Fig. 4 shows a schematic illustration of a cross-sectional view in a X/Y-plane of a PIC 1 according to a further embodiment of the invention. The embodiment of the PIC 1 shown in this cross-sectional view of a further embodiment is based on and compatible with the PIC 1 shown in Fig. 1 to 3.

The heating elements 30 are connected to electric contacts 40, which are positioned on either side of the local opening 20. These electric contacts 40 are used to apply a voltage that generates a current through the heating elements 30, thereby activating them to provide the necessary heat to the functional part 11. The heating elements 30 are likely configured as metal conductors that provide Joule heating when activated. In some embodiments, the signal voltage is one of a DC-voltage to generate a DC-current as the first current, an AC-voltage to generate an AC-current as the first current, a pulsed signal. In case of a pulsed signal, the heat load to the PIC may be reduced. A typical DC-voltage to be applied to the heater is about 5 V. In further embodiments, the signal voltage is an AC-voltage to generate an AC-current as the first current.

The configuration of the heating elements 30 and the electric contacts 40 suggests that the PIC 1 is designed to provide precise thermal control over the functional part 11. This thermal control is advantageous for annealing processes, where the doped core section 120 needs to be heated to a specific temperature for a predetermined time period to activate the dopants for improved optical properties.

Overall, Fig. 4 provides a detailed view of the structural and functional components of the PIC 1, highlighting the arrangement of the waveguide structure 10, the local opening 20, the heating elements 30, the electric contacts 40, and the core section 120. This configuration ensures that the PIC 1 can effectively perform its intended photonic functions with precise thermal management.

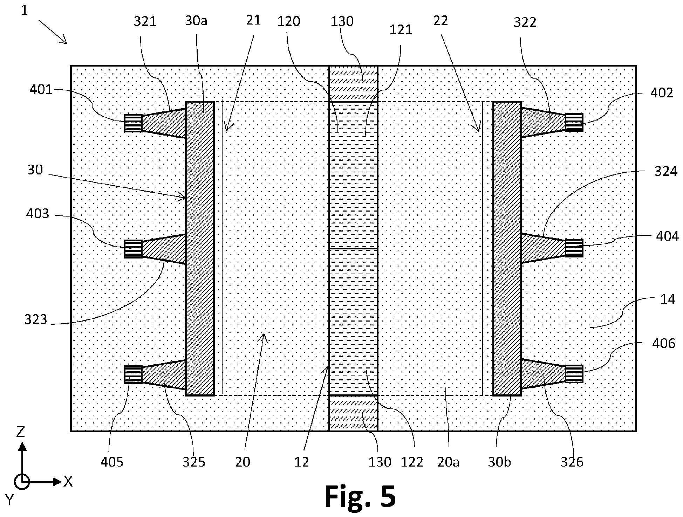

Fig. 5 shows a schematic illustration of a top view in a X/Z-plane of a PIC 1 according to a further embodiment of the invention. The embodiment of the PIC 1 shown in this view is based on and compatible with the PIC 1 shown in Fig. 1 to 3 and in particular Fig. 4.

On the left side 21 of the local opening 20, there are three electric contacts 401, 403, and 405 connected to the heating element 30a, illustrating the concept of segmented heaters. Similarly, on the right side 22 of the local opening 20, there are three electric contacts 402, 404, and 406 connected to the heating element 30a, respectively. These heating elements 30a, 30b are arranged parallel to the doped core section 120 of the core layer 12. The electric contacts 401, 402, 403, 404, 405, and 406 are configured to apply a signal voltage to generate a current through the heating elements 30a, 30b, thereby activating the heating elements 30a, 30b to produce heat.

The heating elements 30a on the left side 21 are connected to the electric contacts 401, 403, and 405 via corresponding conductive paths 321, 323, and 325 respectively. Similarly, the heating elements 30b on the right side 22 are connected to the electric contacts 402, 404, and 406 via corresponding conductive paths 322, 324, and 326 respectively. These conductive paths 321-326 ensure the proper flow of current to the heating elements 30a, 30b when a voltage is applied.

Heating elements 30a and 30b may be activated through electric contacts 401 and 403 in conjunction with electric contacts 402 and 405 to heat and anneal a first portion 121 of the doped core section 120, whereas heating elements 30a and 30b may be activated through electric contacts 403 and 406 in conjunction with electric contacts 402 and 405 to heat and anneal a second portion 122 of the doped core section 120. The annealing of portions 121 and 122 may be applied subsequently so that a heat load of the PIC 1 during the annealing process is reduced.

The heating elements 30a, 30b are embedded within the cladding layer 14 and are positioned adjacent to the local opening 20 to efficiently transfer heat to the doped core section 120 of the core layer. The arrangement of the heating elements 30a, 30b on both sides 21, 22 of the local opening 20 ensures uniform heating of the doped core section 12, which is beneficial for processes such as annealing and leading to higher quality waveguide sections e.g. with reduce loss.

Overall, Fig. 5 provides a detailed view of the arrangement of the heating elements 30a, 30b and their electrical connections within the photonic integrated circuit, emphasizing the importance of their placement and configuration for efficient thermal management and functionality of the PIC.

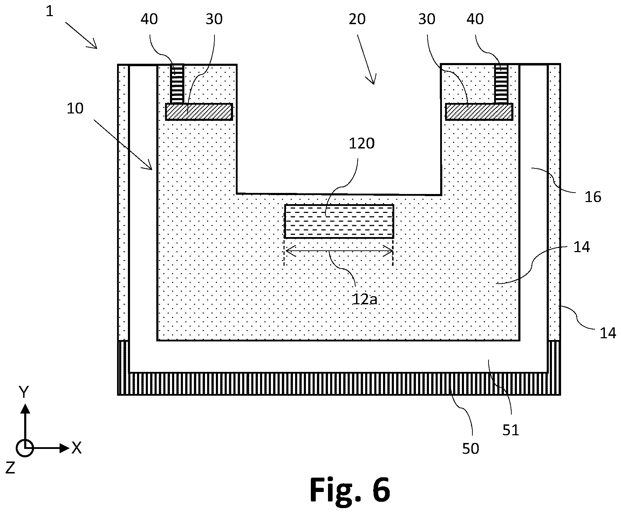

Fig. 6 shows a schematic illustration of a cross-sectional view in a X/Y-plane of a PIC 1 according to a further embodiment of the invention. The embodiment of the PIC 1 shown in this cross-sectional view of a further embodiment is based on and compatible with the PIC 1 shown in Fig. 1 through 5.

In addition to the configuration shown in Fig. 4, the PIC 1 shown in Fig. 6 is formed on a substrate 50, which provides mechanical support and stability. The substrate 50 includes a cavity 51 beneath the functional part 11 of the waveguide structure 10. This cavity 51 is essential for improved thermal isolation during the annealing process. A trench 16 is provided in the cladding layer 14 to obtain access to the substrate 50 for etching the cavity 51 into the substrate 50 via a selective etching of the substrate 50. For example, when the substrate 50 is made of Silicon, Si, and the cladding layer 14 is made of silicon dioxide, SiO2, the cavity 51 might be etched via an SF6 or XeF2 plasma or via a wet etchant solution that minimally etches the cladding layer 14. Etchings selectivities of Si:SiO2 can easily reach 1:100 or more, thereby allowing to form the cavity 51 without damaging the cladding layer 14.

In summary, Fig. 6 provides a detailed cross-sectional view of the photonic integrated circuit 1, highlighting the waveguide structure 10 with its core layer 12 and cladding layer 14, the local opening 20, heating elements 30, electric contacts 40, and the substrate 50 with its cavity 51. The integration of these components ensures efficient optical performance and thermal management within the PIC 1. In particular, the cavity 51 suppresses heat flow from the heater to the substrate, which may be made of silicon and thus having a high heat conductivity. In that way, electrical power required to apply to the heating elements 30 for annealing may be reduced considerably, or a higher temperature can be reached with the same electrical power.

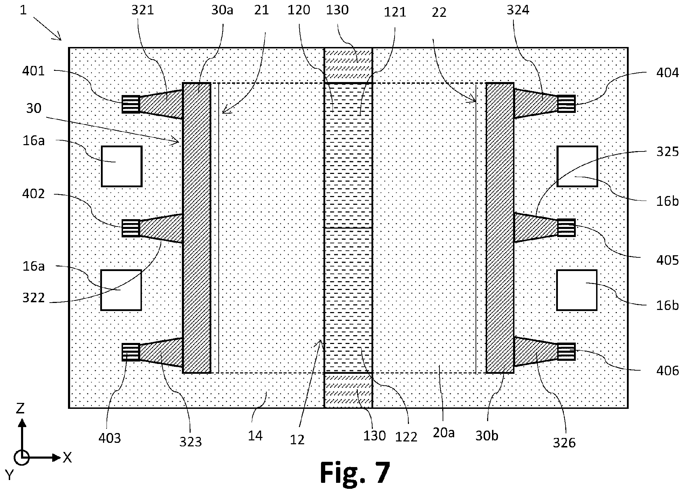

Fig. 7 shows a schematic illustration of a top view in a X/Z-plane of a PIC 1 according to a further embodiment of the invention. The embodiment of the PIC 1 shown in this cross-sectional view of a further embodiment is based on and compatible with the PIC 1 shown in Fig. 1 through 6, in particular Fig. 5 and 6.

The PIC 1 shown in Fig. 7 has the same configuration of the embodiment shown in Fig. 5. However, the position of the trenches 16 located between the electric contacts 401-406 are depicted in Fig. 6. Two trenches 16a are located adjacent to the first or left side 21 of the local opening 20 between the electric contacts 401, 403, 405, and the two trenches 16b are located adjacent to the second or right side 22 of the local opening 20 between the electric contacts 402, 404, 406. The position and amount of the trenches 16a, 16b are selected according to available space on the surface 10a and easy manufacturing and may vary for different embodiments.

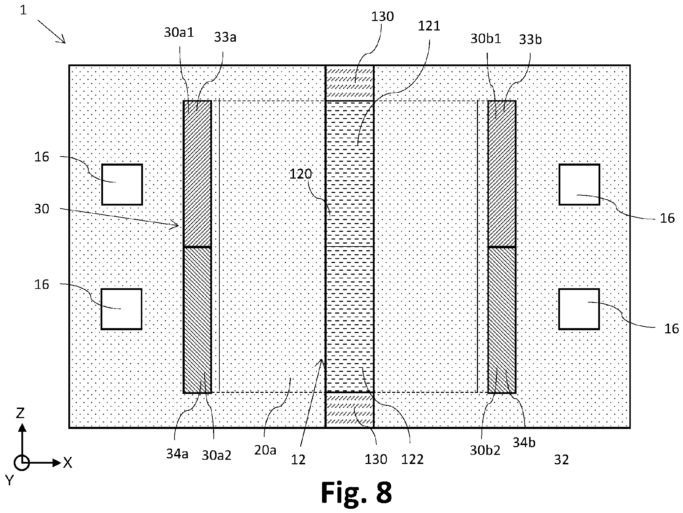

Fig. 8 shows a schematic illustration of a top view in a X/Z-plane of a PIC 1 according to a further embodiment of the invention. The embodiment of the PIC 1 shown in this top view of a further embodiment is based on and compatible with the PIC 1 shown in Fig. 1 and 3, and also relates to the embodiments shown in Fig. 2 and 4 to 7.

In this embodiment, the heating elements 30 comprises a first heating element 30a arranged on the first side 21 of the local opening 20, the first heating element 30a having a first portion 30a1 adjacent to a first portion 121 of the core section 120 and second portion 30a2 adjacent to a second portion 122 of the core section 120. The heating elements 30 further comprises a second heating element 30b arranged on a second side 22 opposing the first side 21 of the local opening 20, the second heating element 30b having first portion 30b1 adjacent to the first portion 121 of the core section 120 and a second portion 30b2 adjacent to the second portion 122 of the core section 120. These heating portions 30a1, 30a2, 30b1, 30b2 are designed to provide heat to the first and second portions 121, 122 of the doped core section 120 when activated. The heating elements 30a, 30b and thus the heating portions 30a1, 30a2, 30b1, 30b2 are configured as metal conductors that provide Joule heating when an electric current is applied.

The PIC 1 further comprises first antenna elements 33a, 34b being resonant to a first AC frequency, second antenna element 34a, 34b being resonant at a second AC frequency different from the first AC frequency. The first antenna elements 33a, 34b arearranged adjacent to a first portion 30a1, 30b1 of the respective first heating element 30a and second heating element 30b. The second antenna elements 34a, 34b are arranged adjacent to a respective second portion 30a2, 30b2 of the respecitve first and second heating elements 30a, 30b. In the view of Fig. 8, the antenna elements 33a, 33b, 34a, 34b are arranged above the heating elements 30a, 30b.

The antenna elements 33a, 33b, 34a, 34b can be activated by inductive energy transfer wirelessly. Similar to the electric contacts 40, a signal voltage can be applied wirelessly for activation. The signal voltage may be one of a DC-voltage, such as a voltage of 5 V, to generate a DC-current as the first current, an AC-voltage to generate an AC-current as the first current, a pulsed signal. In case of a pulsed signal, the heat load to the PIC may be reduced.

In preferred embodiments, the entire structure is supported by a substrate 50, which provides mechanical stability and support for the waveguide structure and its components. The substrate 50 includes a cavity 51 beneath the doped core portions 121 and 122 to facilitate the implantation of the rare earth element and the subsequent annealing process. The cavity is etched into the substrate through trenches 16, which are also indicated in Fig. 8.

In summary, Fig. 8 provides a detailed view of the arrangement of the heating elements 30, local opening, and doped core sections 120 within the waveguide structure 10 of the photonic integrated circuit 1. The heating elements 30 are strategically positioned to provide efficient heating to the portions 121, 122 of doped core sections 120, ensuring proper activation of the dopants through Joule heating and RF resonance. In further embodiments, the local opening 20 is filled with a filling material 23, which may be a conductor to improve the heat flow between the heating elements 30 and the doped core section 120. It is understood that an arbitrary number of heating elements 30 can be provided to heat and anneal an arbitrary number of core portions 121, 122 with arbitrary length depending on the PIC 1 and its application.

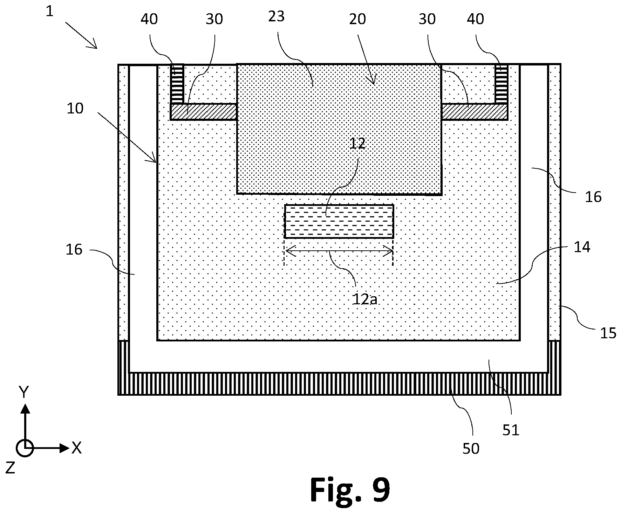

Fig. 9 shows a schematic illustration of a cross-sectional view in a X/Y-plane of a photonic integrated circuit according to a further embodiment of the invention. The embodiment of the PIC 1 shown in this cross-sectional view of a further embodiment is based on and compatible with the PIC 1 shown in Fig. 1 through 8, in particular Fig. 6 and 7.

In this embodiment, this local opening 20 is filled with a filling material 23, which is a thermal conductor and electric insulator. In this way, the filling material 23 improves the heat flow from the heating elements 30 to the doped core section 120. It further blocks the dissipation of the heat by air convection within the local opening 20, in case the local opening 20 is not filled with any filling material 23. Suitable thermally conductive materials 23 might be diamond-like carbon, doped amorphous carbon, amorphous silicon, doped polycrystalline silicon. Preferably a tetrahedral amorphous carbon (ta-C) with high level of sp3-hybridation and, consequently a high thermal conductivity > 100 W/mK. To further increase thermal conductivity, the amorphous carbon layer might be co-deposited with other elements, such as silicon, Si or metals. This allows to produce thin films 23 that are electrically insulators with high thermal conductivity that are also stable at the annealing temperature of interest. Thermally conductive layer 23 might be deposited by CVD techniques, for instance plasma-enhanced CVD deposition from carbon precursor gases. Conveniently, diamond-like thin films can be selectively etched via an oxygen plasma in barrel reactors with very high selectivity towards silicon, Si, silicon dioxide SiO2 and metal heaters. This allows to perform the deposition of the diamond-like thin-film 23, bias heaters to produce the amount of heat required for annealing region 120 and, selectively remove layer 23. In some embodiments, the biased structure comprises a cavity 51. In alternative embodiments, such biased structure does not comprises a cavity 51.

In further embodiments, the filling material 23 is rather a thermal insulator, thus blocking the heat flow through the local opening 20 but also preventing dissipation of the heat due to air convection within the local opening 20. In this case, the filling material 23 might be a deposited silicon dioxide, SiO2.

This embodiment thus demonstrates the integration of heating elements 30 within the cladding layer 14, the formation of a local opening 20 for doping the core layer 12, and the use of a substrate 50 with a cavity 51 for improved thermal management. In addition, the filling material 23 improves the heat flow from the heating elements 30 to the doped core section 120. The configuration of the heating elements 30 and their corresponding electrical contacts 40 ensures efficient heating and annealing of the doped core section 120.

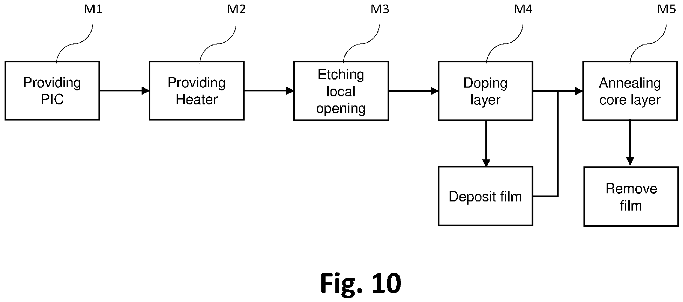

Fig. 10 shows a flowchart of a method for annealing according to an embodiment of the invention.

In step M1, the process begins with providing the photonic integrated circuit PIC 1. This involves preparing the PIC 1, which includes a waveguide structure 10 with a core layer 12 and a cladding layer 14 surrounding the core layer 12. The core layer 12 has a higher index of refraction than the cladding layer 14. As described above, in preferred embodiments the core layer 12 is composed of SiN and the cladding layer is composed of SiO2 for a high index contrast at suitable wavelengths such as in the O-band at about 1310 nm and the C-band at about 1540 nm and corresponding pump wavelengths for amplification.

In step M2, a heating element 30 is provided. The heating element 30 is disposed between the core layer 12 and the surface 10a adjacent to the local opening 20 in the cladding layer 14. The heating element 30 is arranged and configured to provide heat to the functional part 11 of the waveguide structure 10 when activated.

Step M3 involves etching a local opening 20 in the cladding layer 14. This step is typically performed by etching at least partly through the surface 10a of the waveguide structure 10 to form the local opening 20. The local opening 20 is created adjacent to a functional part 11 of the waveguide structure, which may be a doped core section 120 of the core layer 12.

Step M4 involves doping the core layer 12. In this step, a rare earth element is implanted into the doped core section 120 of the core layer 12 through the local opening 20. This step is typically performed by ion implantation. This forms a doped core section 120 of the core layer 12 that includes the rare earth element.

An optional step M4a involves depositing a thermally conductive film 23 in the local aperture to facilitate heat propagation from the sidewalls 20b next to the heating elements down to the doped structure 120.

Finally, in step M5, the doped core section is annealed. This step involves applying electrical power to the heating element 30 such that a temperature above a predetermined threshold is generated by the heating element for a predetermined time period. The annealing process activates the dopant in the doped core section 120 of the core layer 12. A typical predetermined temperature is 900°C or 1000°C and a typical predetermined time period for annealing is from several minutes to about an hour.

Another optional step M5b involves removing the thermally conductive film 23 to allow access to other parts of the photonic integrated circuit 1.

Although most embodiments focusses on annealing a doped core section 120, the invention is not limited to such application. As described above, the functional part 11 may be a modulator, a resonator, an edge coupler or any other photonic component of the PIC 1 so that the local opening 20 can thus be used to modify or improve optical and electrical properties of the waveguide structure 11 by e.g. doping, functionalization or transfer printing.

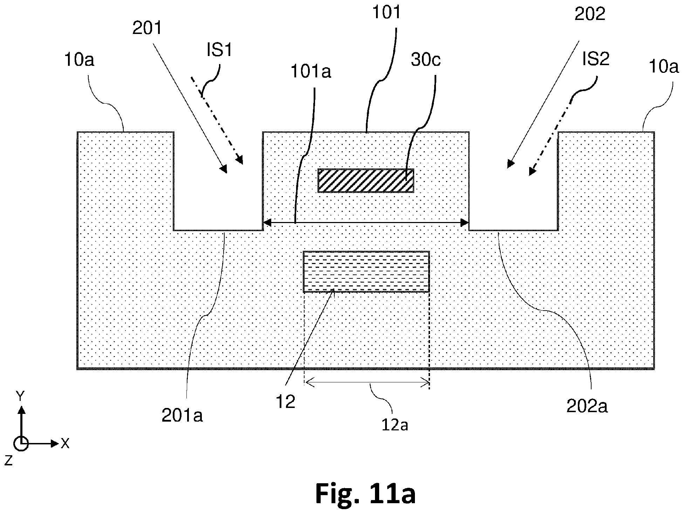

Fig. 11a-b shows a schematic illustration of a cross-sectional view in a X/Y-plane of a photonic integrated circuit 1 according to a further embodiment of the invention.

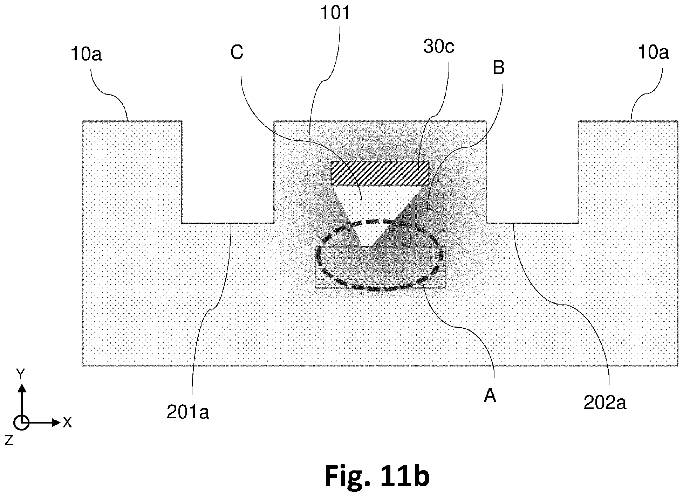

In the embodiment shown in Fig. 11a and 11b, only a single heating element 30c is shown. The heating element 30c is buried in a central section 101 of the waveguide structure. The functional or central section 101 is located between a first local opening 201 and a second local opening 202. The central section 101 is part of the cladding layer 14 of the waveguide structure 10. The heating element 30c is located adjacent 30c

The PIC 1 shown in Fig. 11a and 11b is an embodiment that allows to reduce, preferably minimize, a heat resistance between the heater element 30c and a part of doped a area B, in which an optical mode A is present. The part of the doped area B that is not overlapping with an area C that does not need to be annealed. The doped core section 120 is considered to be within the doped area B.

In this configuration, the implantation of the dopants into the doped area B is carried out by at least implanting with an angle, for instance along a direction IS1 or IS2. Multiple implantation angles can be performed to reach the required doping density near the optical mode A.

Additional, the width of central section 101 might be adjusted accordingly to expose part of a silicon nitride waveguide. For instance, a silicon nitride waveguide width, i.e. the width 12a of the core layer 12 might be larger than the width 101a of section 101 and larger than the heater element 30c.

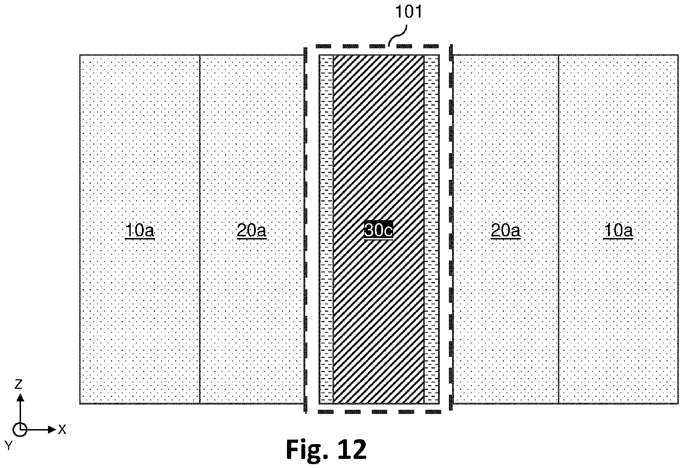

Fig. 12 shows a schematic illustration of a top view in a X/Z-plane of a photonic integrated circuit 1 according to the embodiment of Fig. 11a-b.

Figure 12 shows a top view of heater element 30c, narrower than central section 101 and nitride section 120. The different regions of the cladding layer 14 are at different Y-height and forms surfaces 10a, 201a, 202a. The surface 10a is at a higher Y-value than surfaces 201a, 202a. The width of the central section 101 can be made conveniently narrow to allow max concentration of rare-earth elements. This might be produced by selectively etching parts of cladding 14 around central section 101 so that the nitride portion of 120, is exposed to the rare-earth species being implanted at directions IS1 and or IS2.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### LIST OF REFERENCE SIGNS

- 1: PIC, photonic integrated circuit
- 10: waveguide structure
- 10a: surface of cladding layer
- 11: functional part
- 12: core layer
- 12a: core layer width
- 12b: core layer thickness
- 14: cladding layer
- 14a: cladding layer thickness
- 16, 16a, 16b: trench
- 20: local opening
- 20a: bottom surface of local opening
- 20b: sidewalls of local opening
- 21: first side of local opening
- 22: second side of local opening
- 23: (thin film) filling material
- 30, 30a, 30b, 30c: heating element
- 30a1, 30b1: first portions of heating element
- 30a2, 30b2: second portion of heating element
- 33a, 33b,: first antenna elements
- 34a, 34b: second antenna elements
- 40: electric contacts
- 50: substrate
- 101: central section
- 101a: width of central section
- 120: doped core section
- 121: first portion of core layer
- 122: second portion of core layer
- 130: undoped core section
- 201: first implantation direction
- 202: second implantation direction
- IS1: implantation step 1
- IS2: implantation step 2
- 321-324: conductive paths
- 321-326: conductive paths
- 401-406: electric contacts
- A: optical mode
- B: doped area
- C: area

## Claims

1. A Photonic integrated circuit, PIC (1), comprising:
a waveguide structure (10) including a core layer (12) and a cladding layer (14) surrounding the core layer (12), the core layer (12) having a higher index of refraction than the cladding layer (14),
a local opening (20) formed through a surface (10a) of the waveguide structure (10) into the cladding layer (14) adjacent to a functional part (11) of the waveguide structure (10), and
at least one heating element (30, 30a-c) disposed between the core layer (12) and
the surface adjacent to the local opening (20) in the cladding layer (14), the at least one heating element (30, 30a-c) arranged and configured to provide heat to the core layer (12) when activated.

2. The PIC (1) according to claim 1, wherein
the functional part (11) comprises a doped core section (120) of the core layer (12), wherein the doped core section (120) includes a rare earth element.

3. The PIC (1) according to claim 1 or 2, further comprising
a substrate (50), wherein the waveguide structure (10) is formed on the substrate (50), wherein the substrate (50) comprises a cavity (51) beneath the functional part (11) of the waveguide structure (10).

4. The PIC (1) according to any of the preceding claims, wherein
the at least one heating element (30, 30a-c) is buried in the cladding layer (14), wherein the at least one heating element (30, 30a-c) is configured as a metal conductor providing Joule heating when activated.

5. The PIC (1) according to any of the preceding claims, comprising
a first heating element (30a) arranged on a first side (21) of the local opening (20), and a second heating element (30b) arranged on a second side (22) of the local opening (20), the second side (22) being opposite to the first side (21) of the local opening (20).

6. The PIC (1) according to any of the preceding claims, further comprising a first antenna element (33a, 34b) being resonant to a first AC frequency, and
a second antenna element (34a, 34b) being resonant at a second AC frequency different from the first AC frequency,
wherein the first antenna element (33a, 34b) is arranged adjacent to a first portion (30a1, 30b1) of the at least one heating element (30a, 30b), and the second antenna element (34a, 34b) is arranged adjacent to a second portion (30a2, 30b2) of the at least one heating element (30a, 30b).

7. The PIC (1) according to claim 5, wherein
the first heating element (30a) includes a first electric contact (40, 401-403) and the second heating element (30b) includes a second electric contact (40, 404-406), wherein a ground voltage is applied to the first electric contact (40, 401-403), and a signal voltage is applied to the second electric contact (40, 404-406) to generate a first current to the heating elements (30a, 30b) for activating the first and second heating elements (30a, 30b).

8. The PIC (1) according to claim 7, wherein
the signal voltage is one of a DC-voltage to generate a DC-current as the first current, an AC-voltage to generate an AC-current as the first current, a pulsed signal.

9. The PIC (1) according to any of the preceding claims, wherein
the local opening (20) is filled with a filling material (23), wherein the filling material (23) is a thermal conductor, and preferrably an electirc insulator.

10. A method for annealing, in particular for annealing the photonic integrated circuit, PIC (1), according to any of the precedent claims, comprising:
providing (M1) a photonic integrated circuit, PIC (1), having a waveguide structure (10) including a core layer (12) and a cladding layer (14) surrounding the core layer (12), the core layer (12) having a higher index of refraction than the cladding layer (14),
providing (M2) at least one heating element (30, 30a-30c) between the core layer (12) and the surface adjacent to the local opening (20) in the cladding layer (14), etching (M3) locally the cladding layer (14) at least partly through a surface of the waveguide structure (10) to form a local opening (20),
implanting (M4) a rare earth element into a section of the core layer (12) through the local opening (20) to form a doped core section (120) of the core layer (12), and
annealing (M5) the doped core section (120) for dopant activation by applying electrical power to the at least one heating element (30, 30a-30c) such that a temperature above a predetermined temperature is generated by the at least one heating element (30, 30a-30c) for a predetermined time period.

11. The method according to claim 10, wherein
the waveguide structure (10) is provided on a substrate (50) of the PIC (1), further comprising:
etching the substrate (50) beneath the doped core section (120) to form a first cavity.

12. The method according to claim 10 or 11, wherein
a first heating element (30a) is provided on a first side (21) of the local opening (20), and
a second heating element (30b) is provided on a second side (22) of the local opening (20), the second side (22) being opposite of the first side (21) of the local opening (20).

13. The method according to any of claims 10 to 12, wherein
the first heating element (30a) includes a first electric contact (40, 401-403) and the second heating element (30b) includes a second electric contact (40, 404-406), wherein a ground voltage is applied to the first electric contact (40, 401-403), and a signal voltage is applied to the second electric contact (40, 404-406) to generate a first current to the first and second heating elements (30a, 30b).

14. The method according to any of claims 10 to 13, further comprising:
filling the local opening (20) with a filling material (23) before applying electrical power to the at least one heating element, wherein the filling material (23) is a conductor.

15. The method according to any of claims 10 to 14, wherein
a plurality of heating elements (30, 30a-c) is provided between the core layer (12) and the surface adjacent to the local opening (20) in the cladding layer (14), the plurality of heating elements arranged in the cladding layer (14) between the surface and the core layer (12) on opposite sides of the local opening (20), wherein electrical power is applied to the plurality of heating elements (30, 30a-c) to anneal the core layer (12) for dopant activation.
